(19) Europäisches Patentamt
European Patent Office
Office européen des brevets

(11) EP 1 185 000 A1

(12) # DEMANDE DE BREVET EUROPEEN

(43) Date de publication:
**06.03.2002 Bulletin 2002/10**

(51) Int Cl.[7]: **H04B 7/005**, H04L 25/02

(21) Numéro de dépôt: **01402148.9**

(22) Date de dépôt: **09.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **31.08.2000 FR 0011118**

(71) Demandeur: **ALCATEL**
**75008 Paris (FR)**

(72) Inventeurs:
- **Da Rocha, Alexandre**
  **92800 Puteaux (FR)**
- **Guilbaud, Michael**
  **95100 Argenteuil (FR)**

(74) Mandataire: **Fournier, Michel et al**
**Companie Financière Alcatel, DPI, 30, Avenue Kléber**
**75116 Paris (FR)**

(54) **Dispositif de réception pour unité de radiocommunication mobile mettant en oeuvre un estimateur de vitesse**

(57) L'invention concerne un dispositif de réception (5) pour unité mobile de radiocommunication communiquant avec une station de base (1) par l'intermédiaire d'un canal de propagation (2), le dispositif de réception (5) comprenant un chercheur de trajets (6) pour déterminer les retards associés à un signal multi-trajets, un estimateur de canal (7) fournissant une estimation du canal de propagation (2) d'une part, à un bloc de filtrage (9), qui peut être composé d'une banque de filtres de Wiener, prévu pour optimiser les estimations du canal de propagation et, d'autre part, à un estimateur de vitesse (8) qui fournit la vitesse estimée de l'unité mobile de radiocommunication audit bloc de filtrage (9) de manière à sélectionner le filtre adéquat correspondant à l'estimation de vitesse.

L'invention concerne également un procédé d'estimation de vitesse destiné à être mis en oeuvre dans un dispositif de réception pour unité de radiocommunication mobile selon la présente invention.

FIG_1

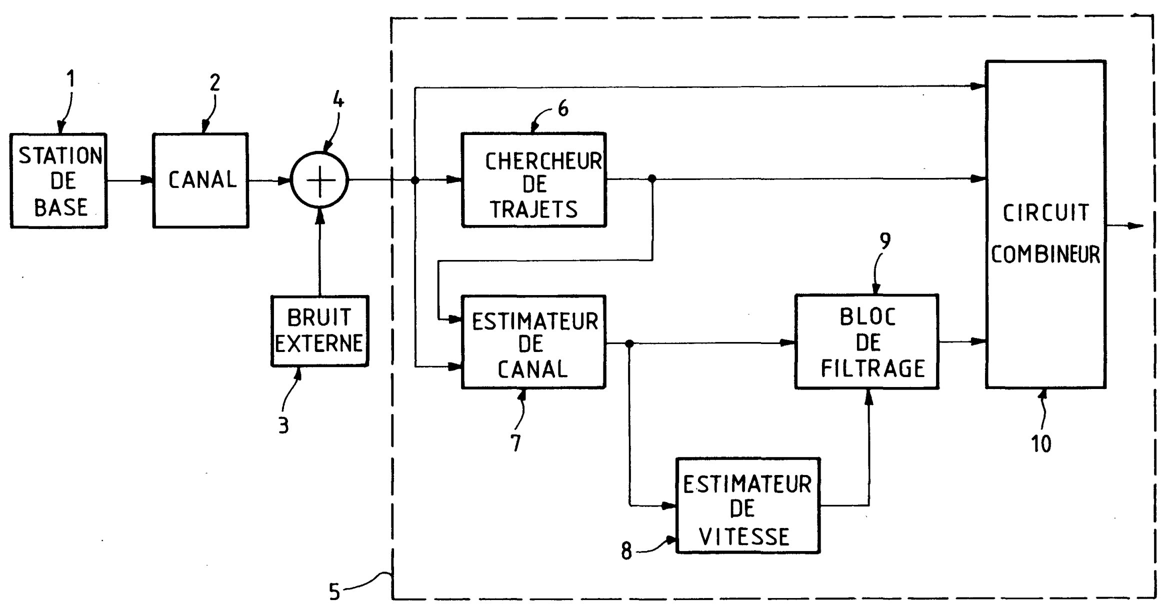


EP 1 185 000 A1

## Description

La présente invention concerne un dispositif de réception pour unité de radiocommunication mobile mettant en oeuvre un estimateur de vitesse.

Cette invention se rapporte plus particulièrement au domaine des télécommunications et notamment au domaine des terminaux de radiocommunication.

Dans de tels équipements, les signaux reçus par le récepteur d'une unité de réception mobile sont dégradés du fait des variations du canal de propagation. Les variations du canal de propagation dépendent principalement de la vitesse de déplacement de l'unité de réception mobile. Les variations du canal entraînent une erreur d'estimation du canal. Ceci a pour conséquence néfaste d'entraîner une dégradation significative en terme de taux d'erreurs binaires au moment du décodage du signal de réception. Aussi, un estimateur de canal de propagation peut être prévu dans la structure du récepteur du terminal de radiocommunication afin de tenir compte des variations d'amplitude du signal reçu par l'antenne du récepteur du fait de la vitesse de déplacement de l'unité de réception mobile.

Néanmoins, l'estimateur de canal de propagation est insuffisant pour déterminer la réponse impulsionnelle du canal avec une bonne précision. En effet, quand la vitesse de l'unité de réception mobile augmente, la variation du canal de propagation se produit trop rapidement pour que l'estimateur du canal de propagation puisse estimer les variations de fréquence et de phase avec suffisamment de précision.

Une alternative exposée dans le document de brevet GB 2 276 064 consiste à mettre en oeuvre un filtrage de Wiener au sein du récepteur. Un filtre de Wiener est un filtre numérique à réponse impulsionnelle finie. L'amplitude du signal de sortie d'un tel filtre est étroitement liée à celle du signal d'entrée. En d'autres termes, un filtre de Wiener est un filtre dans lequel le signal de sortie à un instant donné ne dépend que du signal d'entrée à cet instant.

Pour parer le problème de variation du canal de propagation et donc de la dégradation des signaux de réception, le brevet précité divulgue l'utilisation d'une pluralité de filtres de Wiener, chacun d'entre eux étant réglé pour une plage de vitesses contiguës du dispositif de réception mobile. Des moyens de sélection sont mis en oeuvre pour sélectionner le filtre de Wiener adéquat qui permet de maintenir la meilleure liaison radio possible en fonction de la vitesse de l'unité de réception mobile. La sélection est réalisée selon la détection du filtre de Wiener qui a la puissance la plus forte en sortie. Selon l'enseignement du brevet précité, il est nécessaire d'utiliser en parallèle tous les filtres de Wiener du récepteur pour ensuite ne sélectionner que le filtre dont la sortie est de plus forte puissance. Tous les filtres de Wiener du récepteur ont donc besoin d'être en fonction en même temps de manière à sélectionner le bon filtre.

La solution proposée par le document de brevet précité est ainsi rendue très complexe.

Aussi, le but de la présente invention est de pallier les inconvénients de l'art antérieur en proposant un dispositif de réception dont la complexité est réduite de façon très nette, tout en améliorant les estimations du canal de propagation quelle que soit la vitesse de l'unité de réception mobile.

En effet, pour un système de radiocommunication, la connaissance de la vitesse de l'unité de réception mobile est très importante dans le but d'améliorer la qualité de service. La vitesse de l'unité de réception mobile induit des variations du canal de propagation, ce qui a un impact direct sur l'estimation de ce canal et par conséquent sur le taux d'erreurs binaires.

Pour atteindre ce but, l'invention propose un dispositif de réception pour unité de radiocommunication mobile qui comprend d'une part, une banque de filtres de Wiener réglés chacun pour une plage de vitesses déterminée et, d'autre part, un estimateur de vitesse de l'unité de réception mobile dans le but de configurer automatiquement et de façon dynamique le filtre de Wiener adéquat en fonction de la vitesse de l'unité de réception mobile. L'estimateur de vitesse permet de fournir une indication de la vitesse à la banque de filtres de Wiener et permet ainsi la sélection du filtre de Wiener adapté à la vitesse de l'unité de réception mobile. Il y a donc un seul filtre de Wiener qui fonctionne à un moment donné.

La présente invention concerne un dispositif de réception pour unité de radiocommunication mobile communiquant avec une station de base par l'intermédiaire d'un canal de propagation comprenant un chercheur de trajets pour déterminer les retards associés à un signal multi-trajets appliqué sur sa borne d'entrée, ledit signal multi-trajets étant également appliqué à une première borne d'entrée d'un circuit combineur et à une première borne d'entrée d'un estimateur de canal, la borne de sortie dudit chercheur de trajets étant connectée d'une part, à une deuxième borne d'entrée dudit circuit combineur et, d'autre part, à une deuxième borne d'entrée dudit estimateur de canal, lequel estimateur de canal fournit une estimation du canal de propagation à une première borne d'entrée d'un bloc de filtrage prévu pour fournir une estimation optimale dudit canal de propagation à une troisième borne d'entrée dudit circuit combineur en fonction de la vitesse de l'unité de radiocommunication mobile, caractérisé en ce que ledit dispositif de réception comprend en plus un estimateur de vitesse pour estimer la vitesse de l'unité de radiocommunication mobile, dont la borne d'entrée est connectée à la borne de sortie dudit estimateur de canal et dont la borne de sortie est connectée à une deuxième borne d'entrée dudit bloc de filtrage, lui fournissant ainsi la vitesse estimée de l'unité de radiocommunication mobile de manière à sélectionner le filtre de Wiener adéquat correspondant à la vitesse estimée.

L'invention concerne également un procédé d'estimation de la vitesse d'une unité de radiocommunication mobile dans un dispositif de réception communiquant avec une station de base par l'intermédiaire d'un canal de propagation, caractérisé en ce qu'il consiste à estimer la vitesse en mesurant la différence de phase entre deux coefficients de canal issus de l'estimateur de canal, selon l'équation suivante :

$$Vn,p = c.\,(\phi_{n+p}-\phi_n)/2\pi.f_c.T_s$$

où : *Vn,p* est la vitesse à l'instant n, calculée avec un décalage p entre les 2 phases des deux coefficients de canal pris en considération;
c est la vitesse de la lumière;
$f_c$ est la fréquence porteuse;
$T_s$ est la période d'échantillonnage des coefficients de canal;
$\phi_n$ est la phase du coefficient de canal à l'instant n.
$\phi_{n+p}$ est la phase du coefficient de canal à l'instant n+p;

D'autres caractéristiques et avantages de l'invention apparaîtront plus clairement à la lecture de la description suivante d'un exemple particulier de réalisation en référence aux figures dans lesquelles :

- la figure 1 est une représentation schématique d'un récepteur de type râteau, connu sous l'expression anglo-saxonne « rake », dans un système de radiocommunication mobile, selon la présente invention;
- la figure 2 montre un schéma représentatif de l'amplitude des puissances des signaux reçus en fonction des retards pour chaque trajet;
- la figure 3 présente le mécanisme d'attribution des filtres de Wiener selon un mode de réalisation préféré de l'invention;
- la figure 4 représente les performances en terme de taux d'erreurs binaires en fonction du rapport signal à bruit;
- la figure 5 représente les variations du décalage entre deux phases à mesurer en fonction de la vitesse de l'unité de réception mobile;
- la figure 6 représente les variations de la constante de temps d'un filtre passe-bas mis en oeuvre dans le procédé selon l'invention en fonction du temps.

La figure 1 illustre donc schématiquement un système de télécommunication mobile mettant en oeuvre un récepteur de type « rake » selon la présente invention.

Une station de base 1 émet des signaux dans toutes les directions à destination de tous les terminaux de radiocommunication qui se trouvent dans sa zone de couverture. Les ondes radioélectriques sont transmises par l'intermédiaire d'un canal de propagation 2. Le canal de propagation 2 correspond au chemin suivi par les ondes radioélectriques entre le point d'émission et le point de réception de celles-ci. Les signaux émis vont être brouillés par du bruit blanc additif gaussien 3. Les valeurs des amplitudes et retards de la réponse impulsionnelle du canal de propagation 2 sont fonction notamment de l'environnement, c'est-à-dire de la région du globe où l'on se trouve. La prise en compte de ce bruit externe 3 est modélisé par l'additionneur 4, où sont additionnés le signal du canal de propagation 2 avec le bruit externe 3. Le signal ainsi modélisé arrive au niveau d'un dispositif de réception 5.

Le signal ainsi modélisé, qui comprend le signal utile tout en tenant compte du bruit externe, est appliqué à une unique borne d'entrée d'un circuit chercheur de trajets 6, à une première borne d'entrée d'un estimateur de canal 7, ainsi qu'à une première borne d'entrée d'un circuit combineur 10. Le circuit chercheur de trajets 6 comprend une borne de sortie connectée à une deuxième borne d'entrée de l'estimateur de vitesse 7 et à une deuxième borne d'entrée du circuit combineur 10.

L'estimateur de canal 7 comprend une borne de sortie connectée, d'une part à une première borne d'entrée d'un bloc 9 de filtrage qui peut être composé, selon un mode de réalisation préféré, d'une pluralité de filtres de Wiener, ou banque de filtres de Wiener, et, d'autre part, à une borne d'entrée unique d'un estimateur de vitesse 8 de l'unité de réception mobile. Cet estimateur de vitesse 8 comprend une borne de sortie connectée à une deuxième borne d'entrée du bloc de filtrage 9 composé d'une pluralité de filtres de Wiener.

Le bloc de filtrage 9 comprend quant à lui une borne de sortie connectée à une troisième borne d'entrée du circuit combineur 10.

Le circuit chercheur de trajets 6 coopère avec l'estimateur de canal 7 pour retrouver le profil du canal de transmission en retard, en phase et en amplitude.

En effet, le dispositif selon l'invention fait partie d'un système de radiocommunication mettant en oeuvre une propagation par trajets multiples. Ainsi, le signal radioélectrique se propage suivant un ou plusieurs trajets dont l'un est le plus court chemin joignant le point d'émission, la station de base 1, au point de réception, le récepteur 5, et les autres trajets sont dus à des obstacles sur lesquels les ondes ricochent avant d'atteindre le récepteur 5 avec des phases différentes de celle de l'onde ayant suivi le chemin le plus court. Les ondes réfléchies parcourent des distances différentes de celle de l'onde directe, leurs phases sont donc en retard par rapport à la phase de celle-ci.

De plus, les ondes arrivant en retard ont parcouru un chemin plus long, elles sont par conséquent davantage atténuées, ce qui signifie que leurs amplitudes sont différentes.

Le signal arrive donc distordu en phase et en amplitude au niveau de l'unité mobile de réception.

Le rôle du circuit chercheur de trajets 6 est alors d'estimer les retards dans la transmission des signaux dus au phénomène de multi-trajet expliqué ci-dessus. Pour ce faire, le circuit 6 met en oeuvre une estimation de puissance pour chacun des trajets permettant ainsi de déduire les retards. Le circuit chercheur de trajet 6 reçoit en entrée le signal multi-trajet et fournit en sortie, après traitement effectué de manière connue dans l'état de la technique par divers algorithmes, le profil en puissance du signal sur un certain temps, tel que représenté à la figure 2. Le circuit 6 met notamment en oeuvre des moyens de corrélation de la séquence pilote de l'unité de réception mobile avec le signal reçu.

La figure 2 montre un diagramme représentatif de l'amplitude des puissances des signaux reçus en fonction des retards pour chaque trajet. Les retards sont représentés en abscisses, et à chaque valeur de retard $\tau 1$, $\tau 2$, $\tau 3$, $\tau 4$, $\tau 5 ... \tau i$, correspond en ordonnées une amplitude de puissance. Les signaux représentés portent la même information, ils arrivent simplement décalés en temps, en phase et en amplitude au niveau du récepteur. Le plus souvent, plus le retard sur un trajet donné est important, plus l'amplitude en puissance du signal reçu au niveau du récepteur est atténuée. Par exemple, pour le trajet qui a accumulé un retard $\tau i$ par rapport au premier trajet, la puissance du signal reçu a une amplitude plus faible, ce qui signifie que l'onde i a parcouru un long chemin et/ou a subi une atténuation due à l'environnement pour arriver à l'unité de réception mobile. Ces trajets ne sont pas pris en compte dans la suite. En effet, par l'intermédiaire d'autres algorithmes, on décide de fixer un certain seuil et de ne garder que les trajets qui ont un niveau de puissance supérieur au bruit, c'est-à-dire ceux qui doivent être utilisés pour maintenir la communication entre la station de base 1 et le récepteur 5.

Une fois que les différents retards ont pu être déterminés grâce au traitement mis en oeuvre par le circuit chercheur de trajets 6, l'estimateur de canal 7 entre en action afin de fournir une première estimation de la réponse impulsionnelle du canal de propagation. En d'autres termes, l'estimateur de canal 7 a pour fonction de déterminer les amplitudes et les phases de chaque trajet. Afin de remplir cet objectif, il est nécessaire que l'estimateur de canal 7 reçoive en entrée d'une part, le signal à trajets multiples et, d'autre part, les retards calculés par le circuit chercheur de trajets 6. Ainsi, Les valeurs des retards des différents trajets $\tau 1$, $\tau 2$, $\tau 3$, $\tau 4$, $\tau 5 ... \tau i$, qui ont été vues en référence à la figure 2, doivent être fournies à l'estimateur de canal 7 par le circuit chercheur de trajets 6. En effet, pour déterminer l'amplitude et la phase du signal pour chaque trajet, l'estimateur de canal 7 doit connaître la valeur du retard $\tau$ de chaque trajet.

Partant de ces données, l'estimateur de canal 7 sait qu'il y a un trajet à $\tau 1$, à $\tau 2$, ... $\tau i$. Il va alors calculer l'amplitude et la phase du signal à trajets multiples au temps $\tau 1$, $\tau 2$,... $\tau i$. L'amplitude et la phase pour chaque trajet sont alors représentées par un coefficient.

Ces coefficients en amplitude et en phase sont alors fournis à l'estimateur de vitesse 8. L'estimateur de vitesse 8 va se servir des coefficients des trajets calculés par l'estimateur de canal 7 pour estimer la vitesse de l'unité de réception mobile. Selon un autre mode de réalisation, on peut prévoir que l'estimateur de vitesse ne se servira pas de tous les trajets pour estimer la vitesse de l'unité mobile, mais se servira du trajet ayant la puissance la plus forte.

Ces coefficients en amplitude et en phase ont une certaine phase qui varie en fonction de l'effet Doppler dû à la vitesse de l'unité de réception mobile. L'estimateur de vitesse 8 va donc mesurer cette variation de phase qui est étroitement liée à la vitesse de l'unité de réception mobile. Le détail du fonctionnement de l'estimateur de vitesse sera décrit ci-après dans la description en référence notamment aux figures 5 et 6.

L'estimateur de vitesse 8 fournit alors l'estimation de vitesse de l'unité de réception mobile au bloc 9 comprenant, dans l'exemple de réalisation ici proposé, une pluralité de filtres de Wiener. Avec cette estimation de vitesse, on en déduit les coefficients du filtre de Wiener les plus appropriés. En effet, à chaque vitesse, correspond un filtrage. Le filtrage de Wiener a pour objectif de filtrer les coefficients de canal.

L'attribution d'un filtre en fonction de la vitesse peut se faire de différentes manières. Théoriquement, il faudrait un filtre de Wiener adapté pour chaque vitesse. Néanmoins, une telle solution impliquerait de réaliser de longs calculs pour trouver le filtre exactement adapté à la vitesse et serait donc coûteuse en temps.

Une banque de filtres de Wiener est alors utilisée, où chaque filtre est adapté pour une plage de vitesses contiguës différente. Un filtre particulier est utilisé quand la vitesse de l'unité de réception mobile se trouve à l'intérieur d'une plage de vitesse prédéterminée.

La figure 3 présente le mécanisme d'attribution des filtres de Wiener selon un mode de réalisation préféré de l'invention. La figure 3 présente une échelle de vitesses, représentant différentes vitesses de l'unité de réception mobile : V1, V2, V3... Vn, Vn+1. Ainsi, lorsque la vitesse du mobile se trouve à l'intérieur d'une plage de vitesses comprise entre les vitesses V1 et V2 exclue,[V1,V2[, le filtre de Wiener approprié à utiliser est le filtre FW1; lorsque la vitesse du mobile se trouve à l'intérieur d'une plage de vitesses comprise entre les vitesses V2 et V3 exclue, [V2,V3 [, le filtre de Wiener approprié à utiliser est le filtre FW2; et ainsi de suite, lorsque la vitesse du mobile se trouve à l'intérieur d'une plage de vitesses comprise entre les vitesses Vn et Vn+1 exclue, [Vn,Vn+1[, le filtre de Wiener approprié à utiliser est le filtre FWn.

Par conséquent, grâce à l'estimateur de vitesse 8 qui donne une estimation de la vitesse de l'unité de réception mobile au bloc 9 contenant la banque de filtres de Wiener, il est possible de configurer automatiquement et de façon dynamique le filtre de Wiener approprié à la vitesse. Le filtre de Wiener utilisé est donc paramétré par l'estimation de vitesse.

Le filtre de Wiener ainsi sélectionné par l'intermédiaire de l'estimateur de vitesse 8, réalise alors le filtrage, adapté selon la vitesse, des coefficients de canal issus de l'estimateur de canal 7. Ce filtrage permet d'obtenir les coefficients de canal filtrés et ainsi de corriger l'erreur d'estimation des coefficients de canal.

Ensuite, une fois que le filtrage a permis d'atténuer les erreurs de l'estimation canal, le circuit combineur 10 combine tous les trajets précédents en un seul trajet de façon cohérente, c'est-à-dire en corrigeant les erreurs de phase et les retards. Le circuit combineur 10 va retarder les signaux qui arrivent en premier pour prendre ensuite en compte ceux qui arrivent en retard, de manière à pouvoir les combiner tous en même temps en corrigeant les phases.

Ainsi, il est nécessaire que le circuit combineur 10 reçoive en entrée d'une part, le signal à trajets multiples, mais également les retards, calculés par le circuit chercheur de trajet 6, et enfin les estimations canal qui sont issues de l'estimateur de canal 7 et qui ont subi un filtrage de Wiener dans le bloc de filtrage 9.

En sortie du circuit combineur 10, on obtient le signal qui est combiné de manière cohérente, donc sans erreur de phase, avec le maximum de puissance. La démodulation peut alors, débuter pour obtenir les bits de données.

Le dispositif de réception selon la présente invention, qui met en oeuvre un filtre de Wiener paramétré par un estimateur de vitesse, permet d'obtenir un gain à la réception bien meilleur que ceux obtenus avec les dispositifs de réception de l'art antérieur. Ce phénomène est décrit en référence à la figure 4 qui montre les performances en terme de taux d'erreurs binaires BER (« Bit Error Rate ») en fonction du rapport signal à bruit Eb/No (« Energy bit/ Noise ») pris au niveau de l'antenne réceptrice de l'unité de réception mobile, dans le cas où l'unité de réception mobile se déplace à une vitesse de 37,5 kilomètres par heure. Le taux d'erreurs représente le pourcentage d'erreurs dans le signal numérique reçu par l'unité de réception mobile.

Sur la figure 4, une première courbe S1 correspond à la performance en terme de BER en fonction du rapport Eb/No dans le cas où un filtre de Wiener paramétré par l'estimateur de vitesse selon la présente invention est mis en oeuvre dans l'unité de réception mobile. Une deuxième courbe S2 correspond à la performance en terme de BER en fonction du rapport Eb/No dans le cas où un filtre idéal adapté à la vitesse exacte de 37,5 kilomètres par heure est utilisé dans l'unité de réception mobile. Les courbes S1 et S2 sont les mêmes. Enfin, une courbe S3 correspond à la performance en terme de BER en fonction du rapport Eb/No dans le cas où aucun filtre de Wiener n'est utilisé.

Pour prendre un exemple, un BER de $10^{-3}$ est considéré. Un BER de $10^{-3}$ signifie que la qualité de service recherchée correspond à un bit de donnée faux sur mille bits.

Pour un BER de $10^{-3}$, le rapport signal à bruit Eb/No pour la courbe S1, représentative du cas où un filtre de Wiener paramétré par l'estimateur de vitesse est utilisé, est de 7,2 décibels. Pour la courbe S2, représentative du filtre idéal, le rapport Eb/No est de 7,2 décibels également pour un BER de $10^{-3}$. Donc, en mettant en oeuvre un filtre de Wiener paramétré par l'estimateur de vitesse, les mêmes performances qu'avec le filtre idéal sont obtenues.

Par contre, pour la courbe S3, représentative du cas où il n'y a pas de filtre de Wiener de mis en oeuvre, le rapport Eb/No est de 7,7 décibels, soit 0,5 décibel de plus que pour la courbe SI. Ainsi, dans ce cas, pour obtenir la même qualité de service, il faut prévoir une puissance d'émission supérieure au niveau de la station de base et du mobile.

La mise en oeuvre, dans l'unité de réception mobile, d'un filtre de Wiener paramétré par l'estimateur de vitesse selon la présente invention permet d'obtenir un gain en puissance de 0,5 décibels à 37,5 kilomètres par heure et donc d'émettre avec moins de puissance au niveau de la station de base. Ce phénomène présente une importance particulière dans le cadre de la norme UMTS, acronyme pour l'expression anglo-saxonne « Universal Mobile Telecommunication System », où le nombre d'utilisateurs pour une station de base est intimement lié à la puissance d'émission. Ainsi, plus la puissance d'émission est faible, plus le nombre d'utilisateurs pour une même station de base peut être élevé.

L'estimateur de vitesse va maintenant être décrit plus précisément en référence notamment aux figures 5 et 6. L'estimation de la vitesse est mis en oeuvre par l'intermédiaire d'un procédé simple qui est adapté à tout type de canal de propagation.

La connaissance de la vitesse de l'unité de réception mobile est très importante pour pouvoir améliorer la qualité du service. En effet, la vitesse de l'unité de réception mobile entraîne des variations de canal, ce qui a un impact direct sur l'estimation de canal et, par conséquent, sur le taux d'erreurs binaires BER. Pour améliorer la qualité de la réception, une estimation de canal est mise en oeuvre, puis, un filtrage de Wiener de la réponse impulsionnelle du canal de propagation est utilisé. Cependant, le filtre de Wiener à utiliser doit être adapté à la vitesse de l'unité de réception mobile pour permettre un traitement performant. C'est pourquoi, un estimateur de vitesse est mis en oeuvre dans le dispositif de réception selon l'invention pour paramétrer le filtre de Wiener à utiliser.

Le procédé selon l'invention est basé sur le principe de la fréquence Doppler qui, de façon bien connue, est liée à la vitesse de l'unité de réception mobile. La vitesse de l'unité de réception mobile est liée aux variations de canal de propagation, lesquelles variations entraînent des distorsions du signal, en particulier une variation de phase.

Ainsi, le procédé d'estimation de la vitesse consiste à mesurer la fréquence Doppler en calculant la différence de phase entre deux coefficients de canal. Le procédé selon l'invention utilise la réponse impulsionnelle de canal issue de l'estimateur de canal pour mesurer la différence de phase entre deux réponses impulsionnelles de canal. L'équation 1 suivante montre la relation entre la différence de phase de l'estimation de canal et la vitesse de l'unité de réception mobile :

$$Vn,p = c.(\phi_{n+p}-\phi_n) / 2\pi.f_c.T_s \qquad \text{équation 1}$$

où : *Vn,p* est la vitesse instantanée à l'instant n, calculée avec un décalage p entre les 2 phases de l'estimation de canal prises en considération;
c est la vitesse de la lumière;
$f_c$ est la fréquence porteuse, de l'ordre de 2 Giga Hertz dans un système UMTS;
$T_s$ est la période d'échantillonnage des coefficients de canal et représente dans cet exemple 666 microsecondes;
$\phi_n$ est la phase du coefficient de canal à l'instant n.
$\phi_{n+p}$ est la phase du coefficient de canal à l'instant n+p;

Pour estimer la vitesse de cette manière, il est donc nécessaire d'effectuer auparavant une mémorisation des coefficients de canal issus de l'estimateur de canal.

Une première étape du procédé d'estimation de la vitesse selon l'invention consiste à effectuer une mesure adaptative de la vitesse en fonction du profil en puissance du signal multi-trajets, tel que représenté à la figure 2. En effet, quand le rapport signal à bruit Eb/NO est trop faible, on ne peut pas distinguer le signal du bruit. La mesure de la vitesse n'est alors pas représentative et peut être totalement erronée.

Pour estimer une vitesse de l'unité de réception mobile qui soit représentative, on mesure une vitesse par trajet i, tel que représenté à la figure 2. Cette mesure de la vitesse sur chaque trajet est réalisée selon l'enseignement de l'équation 1. Tous les trajets peuvent être pris en considération ou simplement quelques trajets.

Puis une estimation finale de la vitesse est réalisée en effectuant une pondération des vitesses estimées sur chaque trajet en fonction de la puissance. Les différentes vitesses sont donc combinées en fonction du profil en puissance du signal multi-trajets, selon l'équation suivante :

$$\hat{V}n,p = \frac{\sum_{i=1}^{N} \hat{V}n,p,i \cdot \alpha i}{\sum_{i=1}^{N} \alpha i}$$

Où :

- $\hat{Vn,p}$ est une estimation de la vitesse instantanée effectuée par l'intermédiaire des vitesses $\hat{Vn,p,i}$ extraites des mesures réalisées sur les différents trajets i;
- $\alpha$i sont des coefficients compris entre 0 et 1, calculés en fonction de l'amplitude de la puissance de chaque trajet i.

Pour le calcul des coefficients $\alpha$i, une mesure de la puissance moyenne peut être effectuée sur chaque trajet avec un filtre du premier ordre. Ainsi, chaque coefficient $\alpha$i sera calculé en fonction de la puissance moyenne $P_{i,moy}$ et de la puissance instantanée $P_{i,inst}$ du trajet i. Si la puissance instantanée est en dessous d'un certain seuil par rapport à la puissance moyenne, la vitesse estimée correspondante ne sera pas prise en compte.

Dans cette première étape, l'estimation de la vitesse est donc réalisée en tenant compte du profil en puissance du signal multi-trajets.

L'estimation de la vitesse sur chaque trajet met en oeuvre plusieurs opérations.

Ainsi, une deuxième étape consiste à effectuer une estimation de la variation de phase en adaptant p en fonction de la vitesse du mobile. La valeur p correspond au décalage en nombre d'échantillons entre les deux phases à mesurer pour calculer la différence de phase. L'une est prise à l'instant n, l'autre est prise à l'instant n+p. Le fait de faire varier p en fonction de la vitesse du mobile permet de pouvoir calculer la variation de phase en toutes circonstances quelle que soit la variation de fréquence Doppler.

La figure 5 montre les variations de p en fonction de la vitesse V. P est compris entre $p_{min}$ et $p_{max}$ suivant la valeur de la vitesse. Lorsque la vitesse V est faible, p est grand et est égal à pmax, ensuite, lorsque le vitesse augmente, p diminue jusqu'à la valeur Pmin.

P peut être calculé en utilisant une fonction linéaire du type $p = A.V_{n,p} + B$, où A et B sont des constantes et p un entier. Cette relation entre p et la vitesse doit être prise comme un exemple et n'est aucunement limitative. Toute autre équation établissant une variation de p en fonction de la vitesse peut être envisagée.

Ainsi, la mesure de la vitesse en prenant deux coefficients de canal espacés par un nombre d'échantillons égal à p, où p est adapté en fonction de la vitesse, permet de réduire l'erreur d'estimation moyenne due au bruit blanc additif gaussien intervenant sur les coefficients de canal. L'équation suivante montre la réduction de l'erreur moyenne :

$$\hat{V}n,p = Vn,p + K.(\varepsilon + n)/p$$

Où :

- $\varepsilon$ est l'erreur d'estimation moyenne dépendante de la vitesse;
- n un bruit gaussien;
- $K = c/(2\pi.f_c.T_s)$;
- *Vn,p* est l'estimation de vitesse à l'instant n et *Vn,p* la vitesse réelle. L'estimation de vitesse est donc égale à la vitesse réelle plus une certaine erreur.

p intervient ici pour diviser l'erreur moyenne. La division par p permet de réduire l'erreur moyenne.

Une troisième étape consiste à calculer la vitesse instantanée selon l'équation 1 décrite ci-dessus.

Une quatrième étape consiste à moyenner les estimations de la vitesse instantanée en utilisant un filtre pour limiter le bruit n. Selon un mode de réalisation préféré de l'invention, ce filtrage peut être mis en oeuvre par l'intermédiaire d'un filtre passe-bas de constante de temps δ.

Enfin, une cinquième étape est mise en oeuvre pour améliorer la convergence de l'algorithme lorsqu'il est lancé.

Cette cinquième étape est illustrée à la figure 6. La figure 6 montre les variations de la constante de temps δ du filtre passe-bas utilisé à l'étape précédente en fonction du temps, et plus précisément en fonction des tranches de temps. En effet, comme expliqué plus haut dans la description, les coefficients de canal issus de l'estimateur de canal sont discrets et donc échantillonnés d'un pas Ts.

La constante de temps δ varie donc entre τmin et τmax. Au début, la constante de temps δmin est faible, ce qui correspond à un temps de convergence rapide, permettant ainsi d'atteindre la valeur de l'échelon de la vitesse moyenne assez rapidement. Ensuite, la valeur de δ augmente en fonction des tranches de temps jusqu'à la valeur δmax, permettant ainsi de réduire les fluctuations dues au bruit.

La convergence de l'algorithme en nombre de tranches de temps est donc améliorée grâce à la gestion dynamique de la constante de temps du filtre de la vitesse instantanée.

## Revendications

1. Dispositif de réception (5) pour unité mobile de radiocommunication communiquant avec une station de base (1) par l'intermédiaire d'un canal de propagation (2) comprenant un chercheur de trajets (6) pour déterminer les retards (τ1, τ2,..., τi) associés à un signal multi-trajets appliqué sur sa borne d'entrée, ledit signal multi-trajets étant également appliqué à une première borne d'entrée d'un circuit combineur (10) et à une première borne d'entrée d'un estimateur de canal (7), la borne de sortie dudit chercheur de trajets (6) étant connectée d'une part, à une deuxième borne d'entrée dudit circuit combineur (10) et, d'autre part, à une deuxième borne d'entrée dudit estimateur de canal (7), lequel estimateur de canal (7) fournit une estimation dudit canal de propagation (2) à une première borne d'entrée d'un bloc de filtrage (9) comprenant une pluralité de filtres de Wiener, ledit bloc (9) étant prévu pour fournir une estimation optimale dudit canal de propagation (2) à une troisième borne d'entrée dudit circuit combineur (10) en fonction de la vitesse de l'unité mobile de radiocommunication, **caractérisé en ce que** ledit dispositif de réception (5) comprend en plus un estimateur de vitesse (8) pour estimer la vitesse de l'unité mobile de radiocommunication, dont la borne d'entrée est connectée à la borne de sortie dudit estimateur de canal (7) et dont la borne de sortie est connectée à une deuxième borne d'entrée dudit bloc de filtrage (9), lui fournissant ainsi la vitesse estimée de l'unité mobile de radiocommunication de manière à sélectionner le filtre de Wiener adéquat correspondant à la vitesse estimée.

2. Dispositif selon la revendication 1 **caractérisé en ce que** chaque filtre de Wiener appartenant au bloc de filtrage (9) est adapté à une plage de vitesses contiguës différente ([V1, V2[, [V2, V3[,..., [Vn,Vn+1[) de l'unité mobile de radiocommunication.

3. Procédé d'estimation de la vitesse d'une unité de radiocommunication mobile dans un dispositif de réception selon la revendication 1, 2 ou 3 **caractérisé en ce qu'**il consiste à estimer la vitesse en mesurant la différence de phase entre deux coefficients de canal issu d'un estimateur de canal 7 selon l'équation suivante :

$$Vn,p = c.\ (\phi_{n+p} - \phi_n)/(2\pi.f_c.T_{s)}$$

où : *Vn,p* est la vitesse à l'instant n, calculée avec un décalage p entre les 2 phases des deux coefficients de canal pris en considération;
c est la vitesse de la lumière;
$f_c$ est la fréquence porteuse;
$T_s$ est la période d'échantillonnage des coefficients de canal;
$\phi_n$ est la phase du coefficient de canal à l'instant n ;
$\phi_{n+p}$ est la phase du coefficient de canal à l'instant n+p.

4. Procédé selon la revendication 3, **caractérisé en ce qu'**il comprend les étapes suivantes consistant à :

a) réaliser une mesure adaptative de la vitesse en fonction du profil en puissance d'un signal multi-trajets;
b) effectuer une estimation de la variation de phase en adaptant le décalage (p) entre les deux phases à mesurer ($\phi_n$, $\phi_{n+p}$) en fonction de la vitesse de l'unité mobile de radiocommunication, de manière à réduire l'erreur d'estimation moyenne ($\varepsilon$) des coefficients de canal;
c) calculer la vitesse instantanée;
d) moyenner ladite vitesse instantanée par l'intermédiaire d'un filtre;
e) améliorer le temps de convergence de l'estimation de la vitesse.

5. Procédé selon la revendication 4, **caractérisé en ce que** l'étape b) réduit l'erreur d'estimation moyenne ($\varepsilon$) en la divisant par le décalage (p).

6. Procédé selon la revendication 4, **caractérisé en ce que** l'étape d) consiste à mettre en oeuvre un filtre passe-bas.

7. Procédé selon la revendication 4, **caractérisé en ce que** l'étape e) consiste à faire varier la constante de temps ($\delta$) du filtre mis en oeuvre à l'étape d) en fonction du temps.

FIG_1

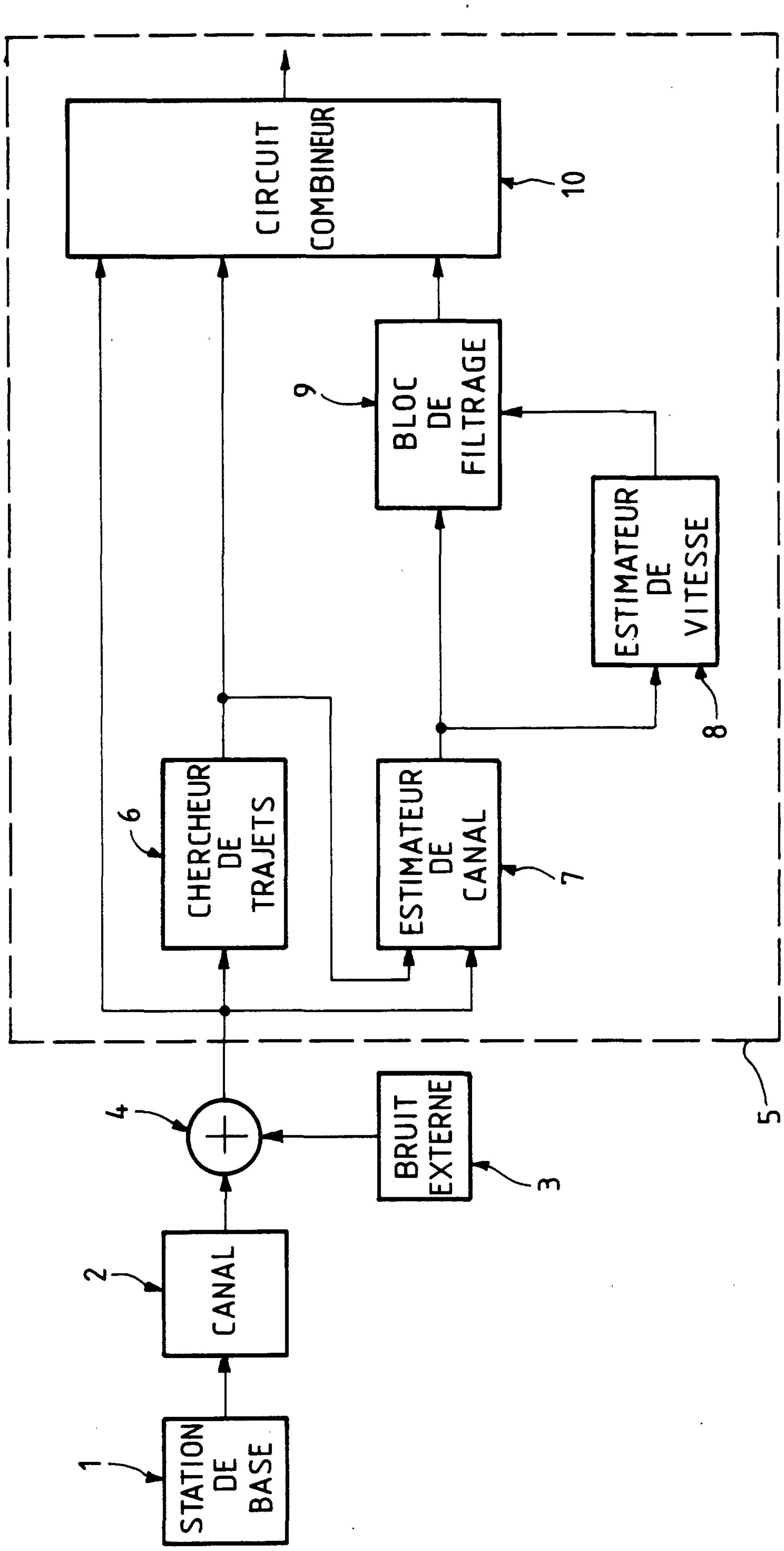
CIRCUIT COMBINEUR
BLOC DE FILTRAGE
ESTIMATEUR DE VITESSE
CHERCHEUR DE TRAJETS
ESTIMATEUR DE CANAL
BRUIT EXTERNE
CANAL
STATION DE BASE
1
2
3
4
5
6
7
8
9
10

FIG_2

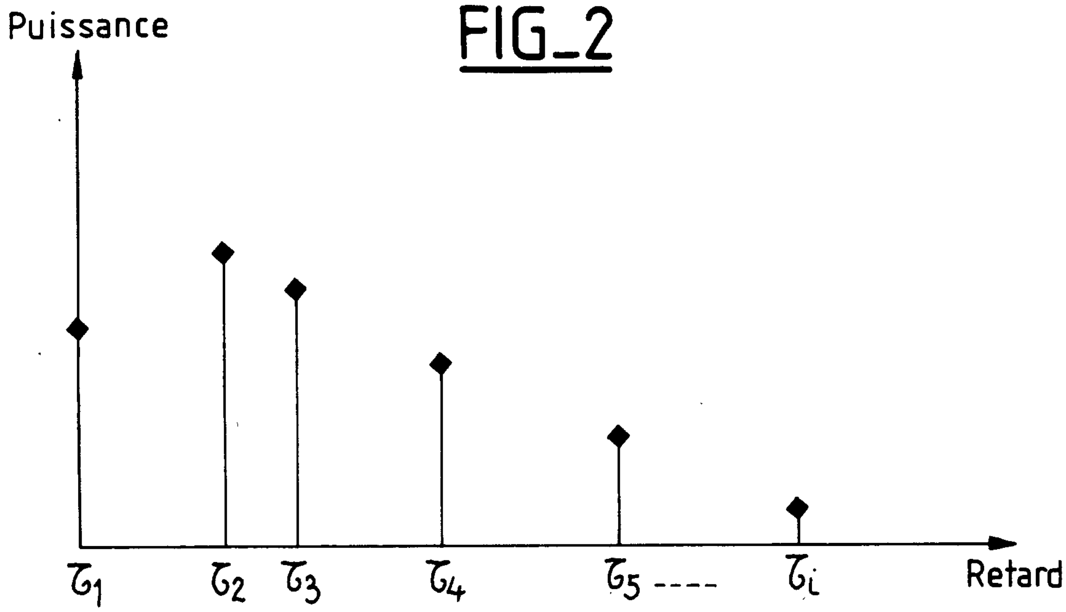
Puissance
$\tau_1$
$\tau_2$
$\tau_3$
$\tau_4$
$\tau_5$ ----
$\tau_i$
Retard

FIG_3

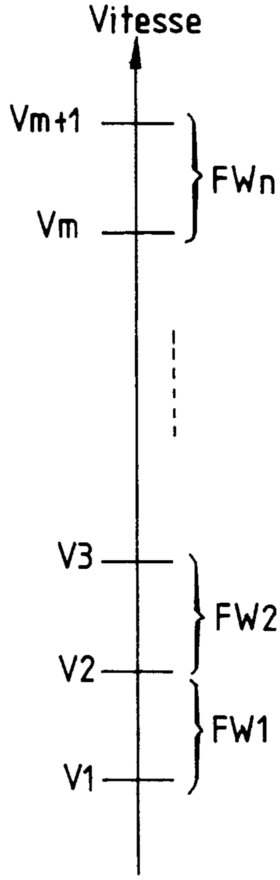
Vitesse
Vm+1
FWn
Vm
V3
FW2
V2
FW1
V1

FIG_4

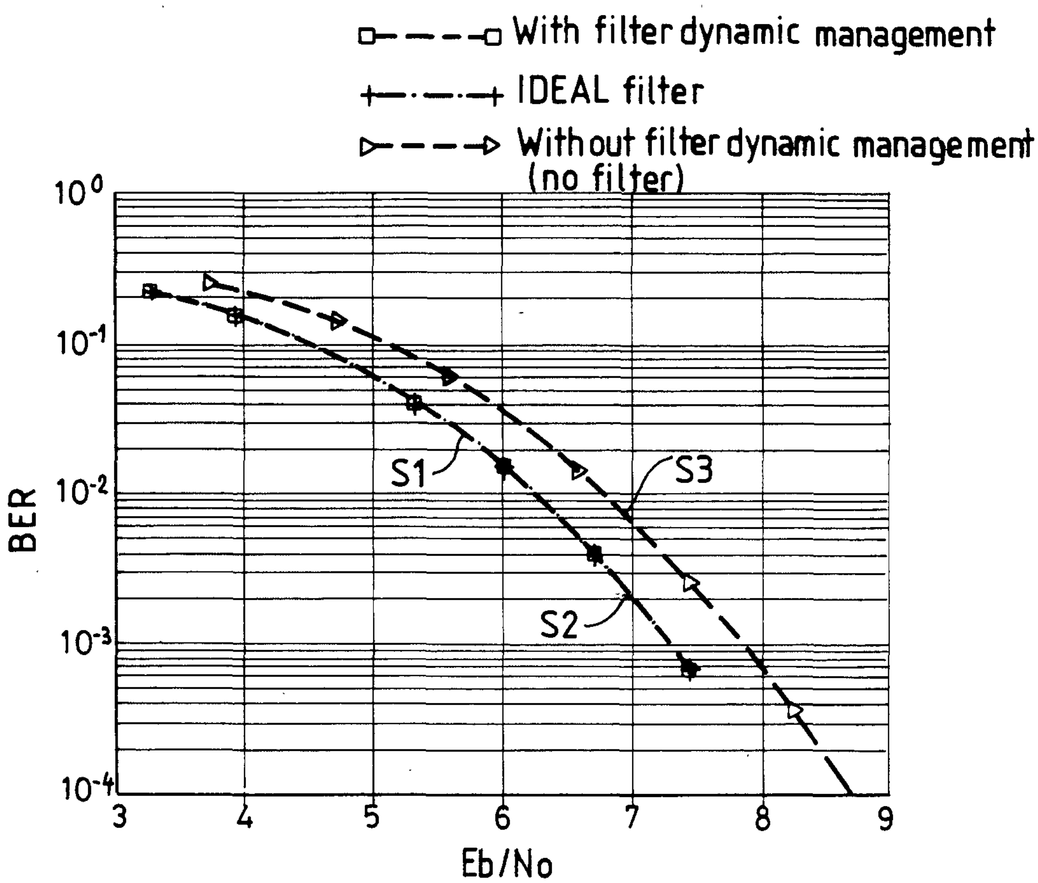
With filter dynamic management
IDEAL filter
Without filter dynamic management (no filter)
BER
10^0
10^-1
10^-2
10^-3
10^-4
3
4
5
6
7
8
9
Eb/No
S1
S2
S3

FIG_5

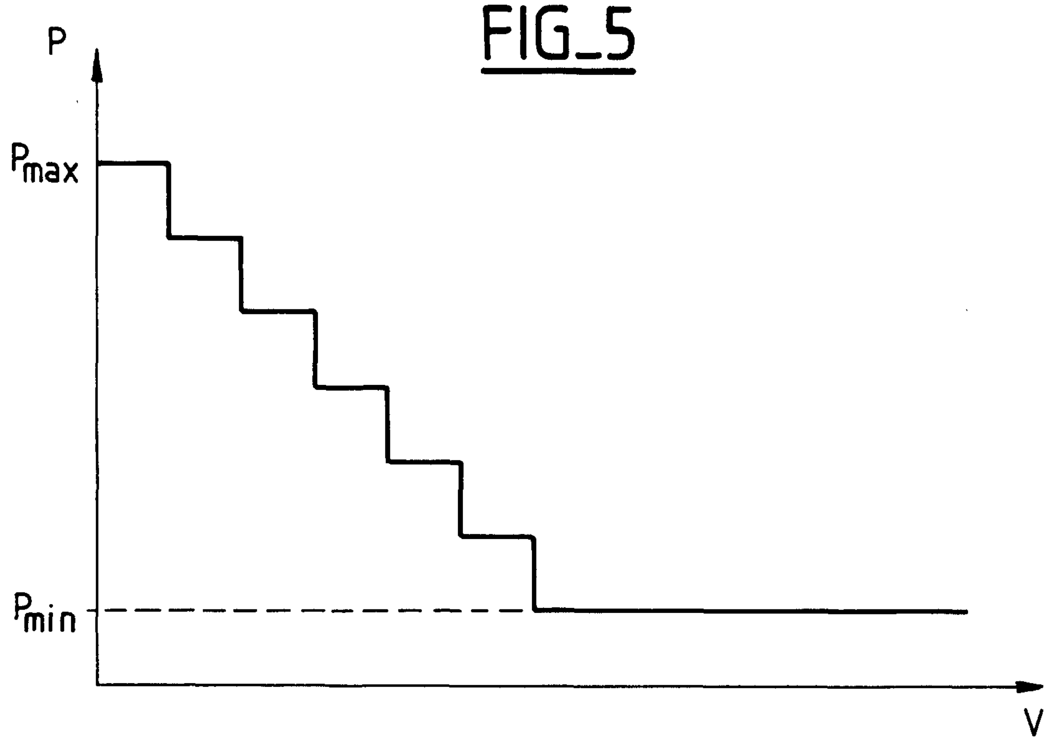


FIG_6

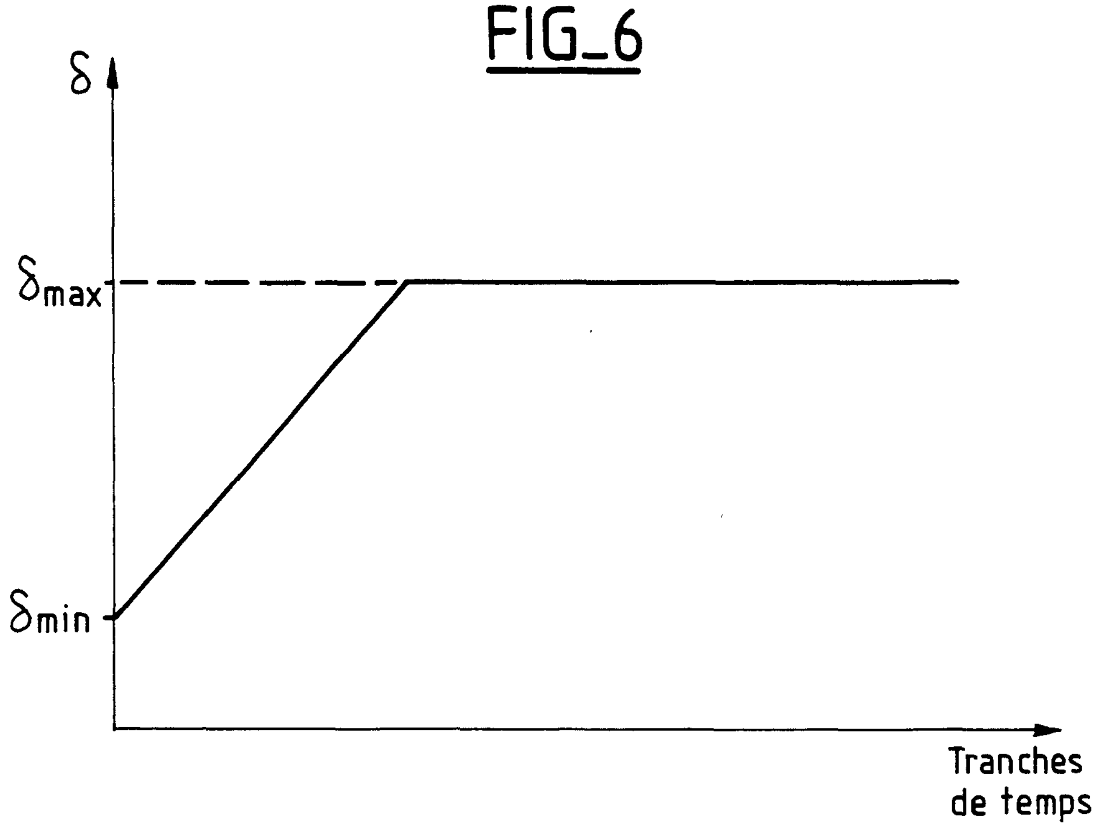

Office européen des brevets

# RAPPORT DE RECHERCHE EUROPEENNE

Numéro de la demande
EP 01 40 2148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br><br><br><br><br><br><br><br><br><br>Y | SAKAMOTO, M.; HUOPONEN, J.; NIVA, I.: "Adaptive channel estimation with velocity estimator for W-CDMA receiver" VEHICULAR TECHNOLOGY CONFERENCE PROCEEDINGS, 2000. SPRING TOKYO. 2000 IEEE 51ST, 'en ligne! vol. 3, 15 - 18 mai 2000, pages 2024-2028, XP002168101 Extrait de l'Internet: <URL:http://iel.ihs.com:80/> 'extrait le 2001-05-22!<br>* abrégé *<br>* page 2024, colonne 2, alinéa 2 - dernier alinéa *<br>* page 2026, colonne 2, alinéa 3 - dernier alinéa *<br>* page 2025; figure 1 *<br>* page 2026; figure 4 * | 1,2<br><br><br><br><br><br><br><br><br><br><br>3,4 | H04B7/005<br>H04L25/02 |
| Y | US 5 513 221 A (PARR MICHAEL ET AL) 30 avril 1996 (1996-04-30)<br>* abrégé *<br>* colonne 9, ligne 5-67 *<br>* figure 3 * | 3,4 | |
| D,A | GB 2 276 064 A (ROKE MANOR RESEARCH) 14 septembre 1994 (1994-09-14)<br>* abrégé * | 1 | |

DOMAINES TECHNIQUES RECHERCHES (Int.Cl.7)

H04B
H04L

Le présent rapport a été établi pour toutes les revendications

| Lieu de la recherche | Date d'achèvement de la recherche | Examinateur |
|---|---|---|
| LA HAYE | 10 décembre 2001 | Yang, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.** EP 01 40 2148

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

10-12-2001

| Document brevet cité au rapport de recherche | | Date de publication | Membre(s) de la famille de brevet(s) | | Date de publication |
|---|---|---|---|---|---|
| US 5513221 | A | 30-04-1996 | US | 6028901 A | 22-02-2000 |
| | | | US | 5627859 A | 06-05-1997 |
| | | | US | 5659576 A | 19-08-1997 |
| | | | CA | 2153479 A1 | 12-01-1996 |
| | | | EP | 0692871 A1 | 17-01-1996 |
| GB 2276064 | A | 14-09-1994 | AUCUN | | |

EPO FORM P0460

Pour tout renseignement concernant cette annexe : voir Journal Officiel de l'Office européen des brevets, No.12/82